# EUROPEAN PATENT APPLICATION

(11) **EP 2 368 739 A1**
(43) Date of publication of application: **28.09.2011**
(21) Application number: 08878875.7
(22) Date of filing: 18.12.2008
(51) Int. Cl.: B60K 6/36, B60K 6/383, B60K 6/387, B60K 6/48, B60K 6/547

(54) **POWER TRANSMISSION DEVICE FOR HYBRID VEHICLE**

(71) Applicant: Honda Motor Co., Ltd., Minato-ku Tokyo 107-8556 (JP)
(72) Inventor: SHIBAHATA, Yasuji, Wako-shi Saitama 351-0193 (JP)
(74) Representative: Beder, Jens
(86) International application number: PCT/JP2008/003831
(87) International publication number: WO 2010/070707

(57) **Abstract**

Provided is a lightweight, compact power transmission device for a hybrid vehicle which permits a simplified construction of a speed changing unit that establishes a plurality of gear shift stages and a reduced size of a motor. The power transmission device is provided with a first speed changing unit which has a first input shaft 3 connected to a power shaft 6 of an internal combustion engine 1 and which establishes a plurality of gear shift stages, and a second speed changing unit which has a second input shaft 4 connected to a power shaft of a motor 2 and which establishes a plurality of gear shift stages which is different from that of the first speed changing unit. The power transmission device is provided with a connecting unit 13 which disconnectably connects the first input shaft 3 and the second input shaft 4.

## Description

### Technical Field

The present invention relates to a power transmission device for a hybrid vehicle which has an internal combustion engine and an electric motor.

### Background Art

Hitherto, as a power transmission device of this type, there has been known a power transmission device that has a first speed changing unit which establishes a plurality of gear shift stages and a second speed changing unit which establishes a plurality of gear shift stages, which is different from that of the first speed changing unit, wherein an input shaft of the first speed changing unit and a power shaft of an internal combustion engine are connected/disconnected by a first clutch, while an input shaft of the second speed changing unit and the power shaft of the internal combustion engine are connected/disconnected by a second clutch, and a power shaft of a motor is connected to the input shaft of one of the speed changing units (refer to, for example, Japanese Patent Application Laid-Open No. 2002-89594).

According to this, switching between the connection with the first clutch or the connection with the second clutch makes it possible to selectively input the power of the internal combustion engine to one of the first speed changing unit and the second speed changing unit. Further, in the speed changing unit to which the power shaft of the motor is connected, the power of the motor can be added to the power of the internal combustion engine. However, the construction adapted to select one of the input shafts of the individual speed changing units and the input shaft of the second speed changing unit and to connect the selected one to the power shaft of the internal combustion engine inevitably involves a complicated construction due to the arrangement of the speed changing units and both clutches, thus limiting the possibility of achieving a reduced size.

There has been proposed another power transmission device in which a power shaft of a motor is connected to a first speed changing unit, to which a power shaft of an internal combustion engine is connected and which establishes a plurality of gear shift stages, through the intermediary of a second speed changing unit which establishes a single gear shift stage (low speed stage) (refer to Japanese Patent Application Laid-Open No. 2008-143260). In this device, the power of the motor is transmitted only at the single gear shift stage. Thus, the motor provided in the power transmission device having the aforesaid construction is required to be capable of generating high torque during a low-speed travel and capable of surviving a high rotational speed during a high-speed travel. This inevitably results in an increased size of the motor, making it impossible to achieve a compact power transmission device.

### Disclosure of the Invention

In view of the above background, an object of the present invention is to provide a power transmission device for a hybrid vehicle which permits a simplified construction of a speed changing unit that establishes a plurality of gear shift stages and also allows a lightweight, compact construction to be achieved by permitting a reduced size of a motor.

A power transmission device for a hybrid vehicle having an internal combustion engine and a motor in accordance with the present invention includes a first speed changing unit which has a first input shaft connected to a power shaft of an internal combustion engine and which establishes a plurality of gear shift stages, a second speed changing unit which has a second input shaft connected to a power shaft of a motor and which establishes a plurality of gear shift stages which is different from that of the first speed changing unit, and a connecting unit which disconnectably connects the first input shaft and the second input shaft to make the power of the internal combustion engine variable by the second speed changing unit through the intermediary of the first input shaft. Further, the connecting unit makes the power of the internal combustion engine variable by the second speed changing unit through the intermediary of the first input shaft.

With this arrangement, the power of the motor can be output from an output shaft through the intermediary of gear shift stages of the second speed changing unit, so that the output of the motor can be controlled to a relatively low level while obtaining sufficient power, thus making it possible to reduce the size of the motor. Further, connecting the first speed changing unit and the second speed changing unit by the connecting unit allows the second speed changing unit to be used also from the internal combustion engine side through the intermediary of the first input shaft, so that the construction of the first speed changing unit can be simplified and the power transmission device can be therefore made lightweight and compact.

Further, the power transmission device according to the present invention preferably includes a single output shaft from which the rotation of each gear shift stage of the first speed changing unit and the rotation of each gear shift stage of the second speed changing unit are output together. This arrangement allows the first speed changing unit and the second speed changing unit to share the output shaft, so that the number of components can be reduced with a resultant simplified structure, making it possible to reduce the manufacturing cost, as compared with the case where each of the first speed changing unit and the second speed changing unit is provided with an output shaft.

Further, in the present invention, any one gear shift stage established by the second speed changing unit is preferably set at a lower speed than that of any one gear shift stage established by the first speed changing unit. This makes it possible to increase the torque of the motor during a low-speed travel and reduce the size of the motor, thus allowing the power transmission device to have a compact construction.

Further, any one gear shift stage established by the second speed changing unit is preferably set at a higher speed than that of any one gear shift stage established by the first speed changing unit. This makes it possible to control the rotational speed of the power shaft of the motor to be relatively low even when the vehicle is traveling at a high speed by the power of the motor, and a reduced maximum rotational speed of the motor allows the size of the motor to be reduced, thus allowing the power transmission unit to be made compact.

Further, according to the present invention, at least one of the first speed changing unit and the second speed changing unit can be constructed of a stepless speed changing mechanism, such as a CVT (Continuously variable transmission), which continuously establishes gear shift stages. The CVT may not be capable of supplying a sufficient output in an area where a high torque is generated. According to the present invention, however, connecting the first speed changing unit to which the power of the internal combustion engine is input and the second speed changing unit to which the power of the motor is input allows the outputs of both the motor and the internal combustion engine to be supplied, making it possible to compensate for a deficient output in a high-torque area. Further, the drive on the motor can be maintained during an instantaneous idle running (coasting) when an accelerator (gas) pedal is turned off, thus making it easy to maintain a speed against a load variation.

Further, in the present invention, preferably, the first speed changing unit is constructed of a rotation transmitting element provided with a plurality of gears corresponding to the gear shift stages, and the rotation transmitting element is provided with a one-way clutch that engages/disengages the transmission of the rotation between gears according to the rotational speed to be transmitted. As an embodiment for this purpose, the one-way clutch of the rotation transmitting element may be provided between the gear and a supporting shaft that supports the gear (e.g., the aforesaid first input shaft or the aforesaid output shaft). With this arrangement, when, for example, the gear and the supporting shaft are connected by the one-way clutch at a higher gear shift stage in the process for moving into a higher gear, the supporting shaft rotates at a higher speed due to the effect of the speed change, causing automatic disengagement of the connection between the gear and the supporting shaft by the one-way clutch at a lower gear shift stage. Thus, the speed changing time can be shortened.

Further, at the time of deceleration when the vehicle is traveling on the power of the internal combustion engine, the rotation is transmitted from the output shaft to the first input shaft, whereas the action of the one-way clutch prevents the rotation from being transmitted to the internal combustion engine through the intermediary of the rotation transmitting element of the first speed changing unit. This permits highly efficient regenerative braking by the motor without using engine brake.

Meanwhile, if, for example, there is a danger of excessive electricity storage during charging by the motor, then engine brake is preferably used at the time of braking. In this case, the rotation transmitting element should be provided with a locking mechanism for maintaining the one-way clutch of the rotation transmitting element in a rotation transmitting state. This arrangement makes it possible to actuate the locking mechanism to use engine brake in the case where the regeneration of the motor is unnecessary at the time of deceleration.

### Best Mode for Carrying Out the Invention

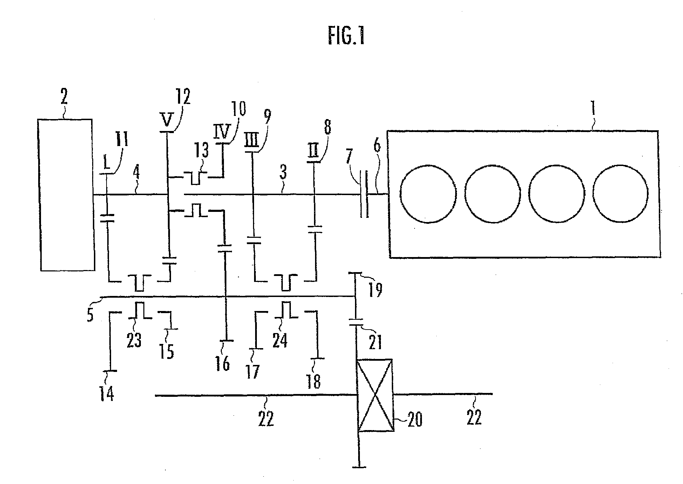

Figure 1 schematically illustrates a power transmission device for a hybrid vehicle in a first embodiment of the present invention. As illustrated in Fig. 1, a power transmission device according to the present embodiment is provided with an engine 1 (internal combustion engine) and a motor 2 (motor/generator) as the driving sources. The power transmission device is further provided with a first input shaft 3, a second input shaft 4 and an output shaft 5, which are all rotatively mounted. The first input shaft 3 and the second input shaft 4 are disposed coaxially with each other, while the output shaft 5 is disposed in parallel to the first input shaft 3 and the second input shaft 4.

The first input shaft 3 is extendedly provided, being disposed coaxially with an engine power shaft 6 through which the power rotation from the engine 1 is output, and a friction engagement clutch 7 is provided between the first input shaft 3 and the engine power shaft 6. The engine power shaft 6 and the first input shaft 3 are connected/disconnected by the clutch 7.

Further, the first input shaft 3 serving as a gear supporting shaft has a second-speed drive gear 8 and a third-speed drive gear 9 coaxially and fixedly supported and a fourth-speed drive gear 10 coaxially and rotatively supported, which are arranged in this order from the end adjacent to the engine 1 (in this order from the right side in Fig. 1). The second input shaft 4 is formed integrally with the power shaft through which the power rotation from the motor 2 is output. The second input shaft 4 serving as a gear supporting shaft has a first-speed drive gear 11 and a fifth-speed drive gear 12, which are coaxially and fixedly supported in this order from the end adjacent to the motor 2 (in this order from the left side in Fig. 1).

The first input shaft 3 is provided with a first connecting unit 13 constituted of a synchromesh mechanism. The first connecting unit 13 switches between a state in which the fourth-speed drive gear 10 securely engages with the first input shaft 3 and a state in which the first input shaft 3 and the second input shaft 4 are connected through the intermediary of the fifth-speed drive gear 12, and also disengages both the fourth-speed drive gear 10 and the fifth-speed drive gear 12 (the second input shaft 4) from the first input shaft 3 at a neutral position.

The output shaft 5 serving as a gear supporting shaft supports a first-speed driven gear 14 that engages the first-speed drive gear 11, a fifth-speed driven gear 15 that engages the fifth-speed drive gear 12, a fourth-speed driven gear 16 that engages the fourth-speed drive gear 10, a third-speed driven gear 17 that engages the third-speed drive gear 9, and a second-speed driven gear 18 that engages the second-speed drive gear 8, and also supports a final reduction drive gear 19. Among the gears, the fourth-speed driven gear 16 and the final reduction drive gear 19 are fixedly supported by the output shaft 5 and the remaining driven gears 14, 15, 17 and 18 are rotatively supported. The final reduction drive gear 19 engages a final reduction driven gear 21 of a differential gear mechanism 20 to drive a drive shaft 22 of the vehicle through the differential gear mechanism 20.

Further, the output shaft 5 is provided with a second connecting unit 23 disposed between the first-speed driven gear 14 and the fifth-speed driven gear 15, and also provided with a third connecting unit 24 disposed between the second-speed driven gear 18 and the third-speed driven gear 17. The second connecting unit 23 switches between a state in which the first-speed driven gear 14 is fixedly connected to the output shaft 5 and a state in which the fifth-speed driven gear 15 is fixedly connected to the output shaft 5, and also disengages both the first-speed driven gear 14 and the fifth-speed driven gear 15 from the output shaft 5 at the neutral position. Similarly, the third connecting unit 24 switches between a state in which the second-speed driven gear 18 is fixedly connected to the output shaft 5 and a state in which the third-speed driven gear 17 is fixedly connected to the output shaft 5, and also disengages both the second-speed driven gear 18 and the third-speed driven gear 17 from the output shaft 5 at the neutral position.

Incidentally, the first input shaft 3 and the output shaft 5 and the rotation transmitting elements of the second-speed drive gear 8, the second-speed driven gear 18, the third-speed drive gear 9, the third-speed driven gear 17, the fourth-speed drive gear 10, and the fourth-speed driven gear 16, which are installed between the first input shaft 3 and the output shaft 5 to transmit rotations, constitute the first speed changing unit in the present invention to establish a second-speed gear shift stage II, a third-speed gear shift stage III, and a fourth-speed gear shift stage IV. Further, the second input shaft 4 and the output shaft 5 and the rotation transmitting elements of the first-speed drive gear 11, the first-speed driven gear 14, the fifth-speed drive gear 12, and the fifth-speed driven gear 15, which are installed between the second input shaft 4 and the output shaft 5 to transmit rotations, constitute the second speed changing unit in the present invention to establish a first-speed gear shift stage L and a fifth-speed gear shift stage V. Further, the first connecting unit 13 corresponds to the connecting unit in the present invention and connects/disconnects the first input shaft 3 and the second input shaft 4 through the intermediary of the fifth-speed drive gear 12, thereby connecting/disconnecting the first speed changing unit and the second speed changing unit.

The following will describe five speed gear shift stages (the first-speed gear shift stage L, the second-speed gear shift stage II, the third-speed gear shift stage III, the fourth-speed gear shift stage IV, and the fifth-speed gear shift stage V) in the power transmission device of the present embodiment which has the aforesaid construction.

The first-speed gear shift stage L is established by setting the third connecting unit 24 at the neutral position and fixedly connecting the first-speed driven gear 14 to the output shaft 5 by the second connecting unit 23. At this time, if the first connecting unit 13 is set at the neutral position and the second input shaft 4 is disengaged from the first input shaft 3, then driving on the motor 2 alone can be accomplished. Further, connecting the first input shaft 3 to the second input shaft 4 by the first connecting unit 13 allows driving to be performed from both the motor 2 and the engine 1. When the driving is carried out by both the motor 2 and the engine 1, the engine power shaft 6 and the first input shaft 3 are connected by the clutch 7.

Further, the rotational driving force from the second input shaft 4 is transmitted to the output shaft 5 through the intermediary of the first-speed drive gear 11 and the first-speed driven gear 14 engaging the first-speed drive gear 11. Thus, the driving force of the first-speed gear shift stage L is output to the drive shaft 22 through the intermediary of the final reduction drive gear 19 and the final reduction driven gear 21.

The second-speed gear shift stage II is established by setting the second connecting unit 23 at the neutral position and by fixedly connecting the second-speed driven gear 18 to the output shaft 5 by the third connecting unit 24. At this time, connecting the second input shaft 4 to the first input shaft 3 by the first connecting unit 13 and disengaging the connection between the engine power shaft 6 and the first input shaft 3 by the clutch 7 allow driving on the motor 2 alone to be accomplished. Further, setting the first connecting unit 13 at the neutral position to disengage the first input shaft 3 from the second input shaft 4 and connecting the engine power shaft 6 and the first input shaft 3 by the clutch 7 allows driving on the engine 1 alone to be accomplished. Further, connecting the second input shaft 4 to the first input shaft 3 by the first connecting unit 13 and connecting the engine power shaft 6 and the first input shaft 3 by the clutch 7 allow driving on both the motor 2 and the engine 1 to be accomplished.

Then, the rotational driving force from the first input shaft 3 is transmitted to the output shaft 5 through the intermediary of the second-speed drive gear 8 and the second-speed driven gear 18 that engages the second-speed drive gear 8. Thus, the driving force of the second-speed gear shift stage II is output to the drive shaft 22 through the intermediary of the final reduction drive gear 19 and the final reduction driven gear 21.

The third-speed gear shift stage III is established by setting the second connecting unit 23 at the neutral position and fixedly connecting the third-speed driven gear 17 to the output shaft 5 by the third connecting unit 24. At this time, connecting the second input shaft 4 to the first input shaft 3 by the first connecting unit 13 and disengaging the connection between the engine power shaft 6 and the first input shaft 3 by the clutch 7 make it possible to accomplish driving on the motor 2 alone. Further, setting the first connecting unit 13 at the neutral position, disconnecting the first input shaft 3 from the second input shaft 4, and connecting the engine power shaft 6 and the first input shaft 3 by the clutch 7 make it possible to accomplish driving on the engine 1 alone. Further, connecting the second input shaft 4 to the first input shaft 3 by the first connecting unit 13 and connecting the engine power shaft 6 and the first input shaft 3 by the clutch 7 make it possible to accomplish driving on both the motor 2 and the engine 1.

Then, the rotational driving force from the first input shaft 3 is transmitted to the output shaft 5 through the intermediary of the third-speed drive gear 9 and the third-speed driven gear 17 engaging the third-speed drive gear 9. Thus, the driving force of the third-speed gear shift stage III is output to the drive shaft 22 through the intermediary of the final reduction drive gear 19 and the final reduction driven gear 21.

The fourth-speed gear shift stage IV is established by setting the second connecting unit 23 and the third connecting unit 24 at the neutral position and by fixedly connecting the fourth-speed drive gear 10 to the first input shaft 3 by the first connecting unit 13. At the fourth-speed gear shift stage IV, the engine power shaft 6 and the first input shaft 3 are connected by the clutch 7 to perform driving on the engine 1 alone.

Then, the rotational driving force from the first input shaft 3 is transmitted to the output shaft 5 through the intermediary of the fourth-speed drive gear 10 and the fourth-speed driven gear 16 engaging the fourth-speed drive gear 10. Thus, the driving force of the fourth-speed gear shift stage IV is output to the drive shaft 22 through the intermediary of the final reduction drive gear 19 and the final reduction driven gear 21.

The fifth-speed gear shift stage V is established by setting the third connecting unit 24 at the neutral position and fixedly connecting the fifth-speed driven gear 15 to the output shaft 5 by the second connecting unit 23. At this time, setting the first connecting unit 13 at the neutral position and disengaging the second input shaft 4 from the first input shaft 3 allow driving on the motor 2 alone to be accomplished. Further, connecting the first input shaft 3 to the second input shaft 4 by the first connecting unit 13 and connecting the engine power shaft 6 and the first input shaft 3 by the clutch 7 make it possible to perform driving on both the motor 2 and the engine 1.

Then, the rotational driving force from the second input shaft 4 is transmitted to the output shaft 5 through the intermediary of the fifth-speed drive gear 12 and the fifth-speed driven gear 15 engaging the fifth-speed drive gear 12. Thus, the driving force of the fifth-speed gear shift stage V is output to the drive shaft 22 through the intermediary of the final reduction drive gear 19 and the final reduction driven gear 21.

The five speed gear shift stages (the first-speed gear shift stage L, the second-speed gear shift stage II, the third-speed gear shift stage III, the fourth-speed gear shift stage IV, and the fifth-speed gear shift stage V) described above are used by switching or combining the powers of the motor 2 and the engine 1 according to the start and traveling condition of the vehicle.

According to the construction described above, the power of the motor 2 can be output from the output shaft 5 through the intermediary of the gear shift stages of the second speed changing unit, so that the output of the motor 2 can be controlled to be relatively small, thus permitting a reduction in the size of the motor 2. Further, connecting the first speed changing unit and the second speed changing unit by the first connecting unit 13 allows the second speed changing unit to be used from the engine 1 side, so that the construction of the first speed changing unit can be simplified. Further, in the second speed changing unit, the gear shift stages established by the element (the second speed changing unit) interposed between the second input shaft 4 to which the power of the motor 2 is input and the output shaft 5 are the first-speed gear shift stage L and the fifth-speed gear shift stage V, which are set to be lower and higher, respectively, than the gear shift stages established by the element (the first speed changing unit) interposed between the first input shaft 3 and the output shaft 5. This arrangement makes it possible to increase the torque of the motor 2 during a low-speed travel and to reduce the maximum rotational speed of the motor 2, so that the size of the motor 2 can be further reduced.

In addition, the output shaft 5 is shared by the first speed changing unit provided with the first input shaft 3 and the second speed changing unit provided with the second input shaft 4. Therefore, the number of components can be reduced with a resultant simplified structure, permitting reduced manufacturing cost, as compared with the case where each of the first speed changing unit and the second speed changing unit is provided with an output shaft.

As described above, the motor 2 can be made smaller and lighter without complicating the power transmission route, thus enabling the power transmission device to have a compact structure.

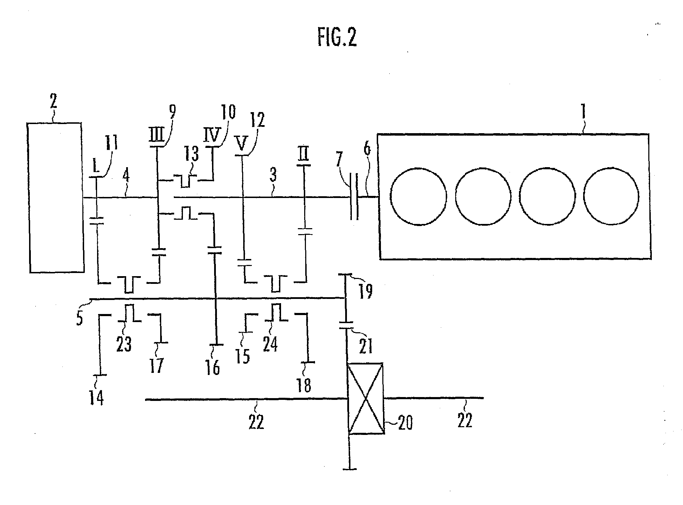

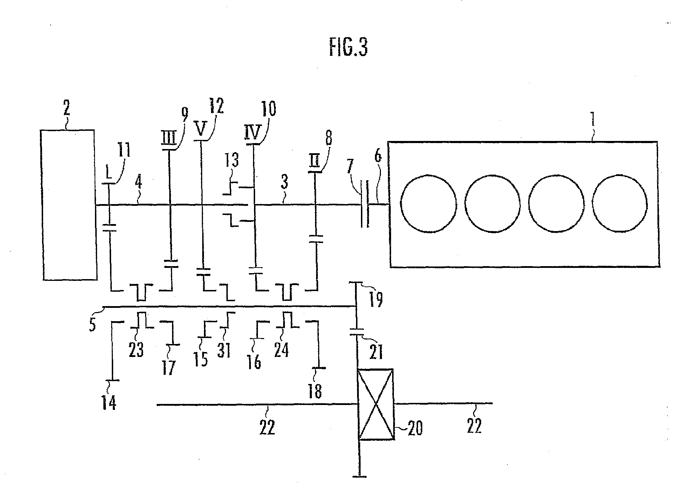

The constructions of the gears and the connecting units for establishing the gear shift stages are not limited to the constructions described above. In a second embodiment illustrated in Fig. 2, a second input shaft 4 may be provided with a third-speed drive gear 9, and a first input shaft 3 may be provided with a fifth-speed drive gear 12. Alternatively, in a third embodiment illustrated in Fig. 3, a second input shaft 4 may be provided with a first-speed drive gear 11, a third-speed drive gear 9, and a fifth-speed drive gear 12, and a first input shaft 3 may be provided with a second-speed drive gear 8 and a fourth-speed drive gear 10. In the third embodiment, a first connecting unit 13 may be provided adjacently to the second input shaft 4 so as to allow the second input shaft 4 to be connected to the first input shaft 3 through the intermediary of the fourth-speed drive gear 10 by the first connecting unit 13. Further, a fifth-speed driven gear 12 can be also connected to an output shaft 5 by a fourth connecting unit 31. Further, although not illustrated, a drive gear or a driven gear of a sixth-speed gear shift stage or more may be additionally provided to increase the number of gear shift stages.

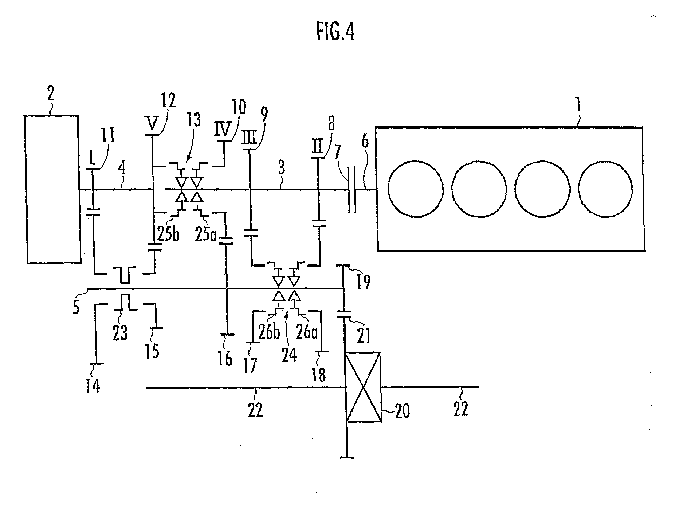

Further, in a fourth embodiment illustrated in Fig. 4, each of a first connecting unit 13 and a third connecting unit 24 may be provided with a one-way clutch. More specifically, the first connecting unit 13 may be divided into two portions, one portion being adjacent to a fifth-speed drive gear 12 and the other portion being adjacent to a fourth-speed drive gear 10, and one-way clutches 25a and 25b are interposed between each of the two portions and a first input shaft 3. Similarly, the third connecting unit 24 may be divided into two portions, one portion being adj acent to a second-speed drive gear 8 and the other portion being adjacent to a third-speed drive gear 9, and one-way clutches 26a and 26b are interposed between each of the two portions and the first input shaft 3. This arrangement permits a shortened gear shifting time. More specifically, in the case of, for example, the configuration illustrated in Fig. 1, to shift the speed from the second-speed gear shift stage II to the third-speed gear shift stage III, the third connecting unit 24 is disengaged by being shifted in a direction to move away from a second-speed driven gear 18, and then the third connecting unit 24 is moved to engage with a third-speed driven gear 17 in the case of the construction illustrated in Fig. 1. In comparison thereto, according to the configuration illustrated in Fig. 4, without disengaging the connection between one portion (the right portion in the figure) of the third connecting unit 24 and the second-speed driven gear 18, the other portion (the left portion in the figure) of the third connecting unit 24 can be engaged with the third-speed driven gear 17, and the one portion (the right portion in the figure) of the third connecting unit 24 and the second-speed driven gear 18 are disconnected by the one-way clutch 26a, so that the time required for the disengagement can be shortened.

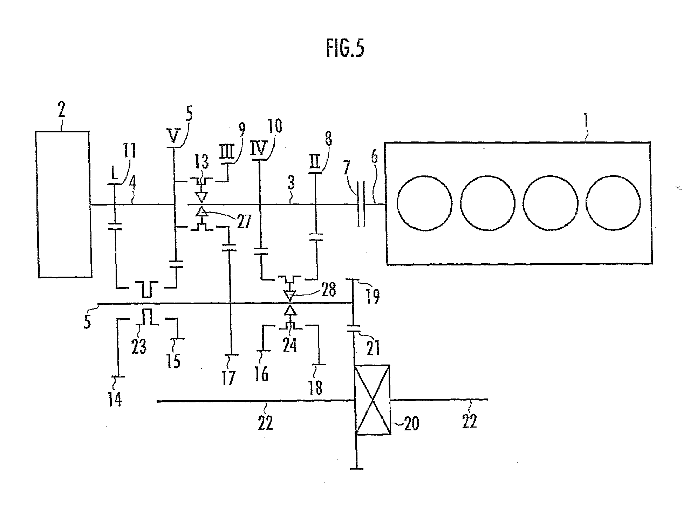

Further, in comparison to the configuration illustrated in Fig. 4, according to a fifth embodiment illustrated in Fig. 5, the position of a third-speed drive gear 9 and the position of a fourth-speed drive gear 10 are switched, and one-way clutches 27 and 28 are provided without dividing each of a first connecting unit 13 and a third connecting unit 24. This arrangement makes it possible to simplify the configurations of the first connecting unit 13 and the third connecting unit 24 and to provide the same advantages as those obtained by the configuration illustrated in Fig. 4.

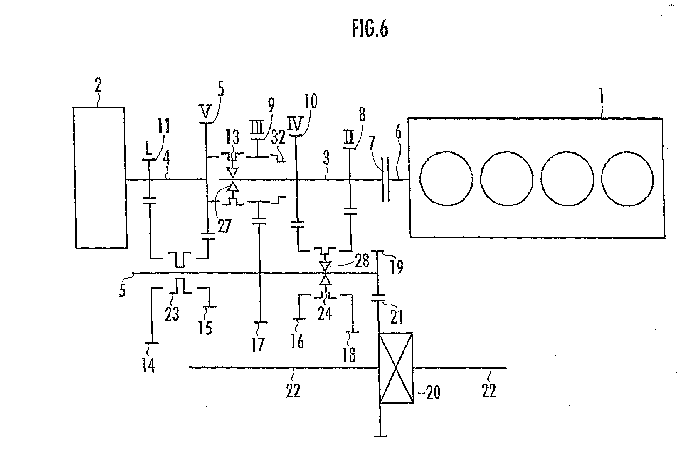

Further, in the configuration illustrated in Fig. 5, at the time of deceleration, the transmission of rotation to an engine 2 from an output shaft 5 through the intermediary of a first input shaft 3 is disengaged by the actions of one-way clutches 27 and 28. Thus, the rotation is transmitted from the output shaft 5 to a second input shaft 4, allowing efficient regenerative braking by a motor 2 to be accomplished without causing a drag of an engine 1. However, if, for example, there is a danger of excessive electricity storage during charging by the motor 2, then engine brake is preferably used at the time of braking. For this reason, in a sixth embodiment illustrated in Fig. 6, a first input shaft 3 is provided with a dog tooth clutch 32 (locking mechanism) which locks a third-speed drive gear 9. This arrangement makes it possible to secure the third-speed drive gear 9 to the first input shaft 3 by the dog tooth clutch 32 to use engine brake at a third gear shift stage III in the case where the regeneration of a motor 2 is unnecessary at the time of deceleration. Incidentally, a state in which the third-speed drive gear 9 is locked onto the first input shaft 3 by the dog tooth clutch 32 is equivalent to a state in which a one-way clutch 27 is locked when a first connecting unit 13 is connected to the third-speed drive gear 9.

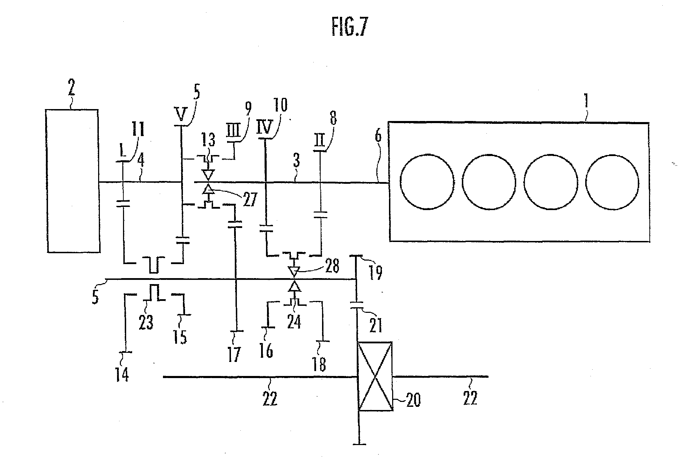

Further, in comparison with the configuration illustrated in Fig. 5, as illustrated by a seventh embodiment in Fig. 7, a clutch 7 between a first input shaft 3 and an engine power shaft 6 may be omitted to combine the first input shaft 3 and the engine power shaft 6 into a connected row arrangement. This makes it possible to omit not only the clutch 7 but also other components, such as an actuator for actuating the clutch 7, thus permitting an even lighter and smaller construction.

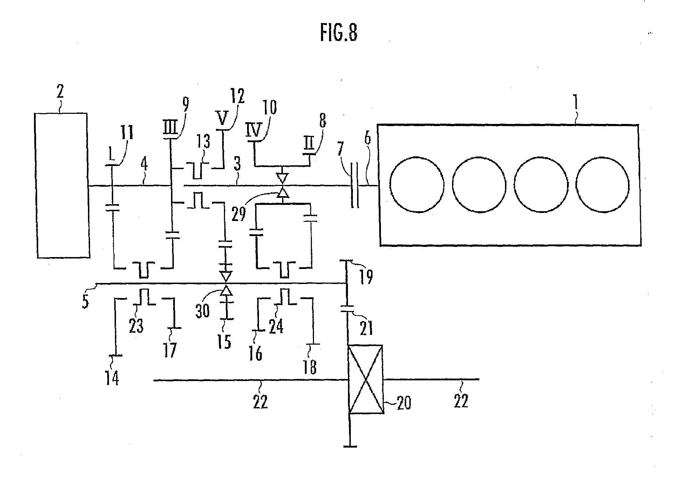

Further, in an eighth embodiment illustrated in Fig. 8, a second input shaft 4 is provided with a third-speed drive gear 9 and a first input shaft 3 positioned adjacently to the third-speed drive gear 9 is provided with a fifth-speed drive gear 12. Further, a second-speed drive gear 8 and a fourth-speed drive gear 10 are combined in a connected row arrangement and supported by the first input shaft 3 through the intermediary of a one-way clutch 29, while a fifth-speed driven gear 15 is supported by an output shaft 5 through the intermediary of a one-way clutch 30. This arrangement makes it possible not only to shorten the speed changing time but also to prevent the mechanism from being complicated.

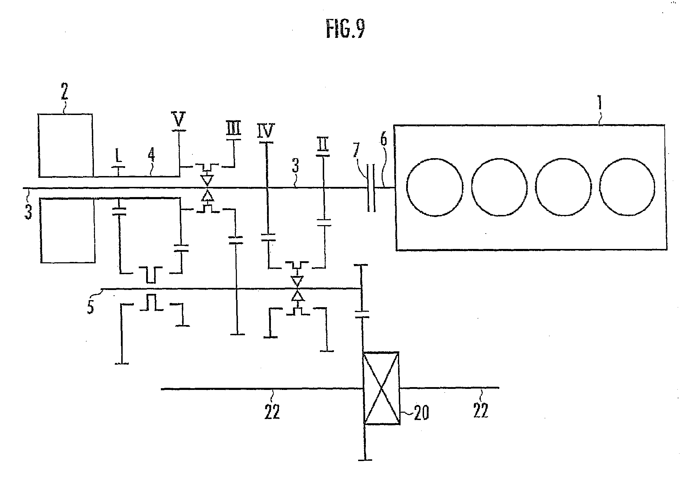

Further, in a ninth embodiment illustrated in Fig. 9, a first input shaft 3 penetrates a second input shaft 4, which is hollow. This makes it possible to provide the same advantages as those of the configuration illustrated in Fig. 5 and also to support the second input shaft 4 by the first input shaft 3, so that the number of components of a bearing member can be reduced, permitting a lightweight, compact construction.

In the embodiments described above, the first input shaft 3, the output shaft 5, and the rotation transmitting element formed of a plurality of gears that is located between the first input shaft 3 and the output shaft 5 to transmit rotation have been used as the first speed changing unit, while the second input shaft 4, the output shaft 5, and the rotation transmitting element formed of a plurality of gears that is located between the second input shaft 4 and the output shaft 5 to transmit rotation have been used as the second speed changing unit. Alternatively, however, a stepless speed changing mechanism, such as a CVT, for example, may be adopted as the rotation transmitting element of either one or both of the first speed changing unit and the second speed changing unit, although not illustrated.

### Industrial Applicability

The present invention, the present invention permits a lightweight, compact construction by simplifying the construction of speed changing units that establish a plurality of gear shift stages and reducing the size of a motor, making the invention ideally used as a power transmission device of a hybrid vehicle.

### Brief Description of the Drawings

[Fig. 1] It is a skeleton diagram of a power transmission device according to a first embodiment of the present invention.
[Fig. 2] It is a skeleton diagram of a power transmission device according to a second embodiment of the present invention.
[Fig. 3] It is a skeleton diagram of a power transmission device according to a third embodiment of the present invention.
[Fig. 4] It is a skeleton diagram of a power transmission device according to a fourth embodiment of the present invention.
[Fig. 5] It is a skeleton diagram of a power transmission device according to a fifth embodiment of the present invention.
[Fig. 6] It is a skeleton diagram of a power transmission device according to a sixth embodiment of the present invention.
[Fig. 7] It is a skeleton diagram of a power transmission device according to a seventh embodiment of the present invention.
[Fig. 8] It is a skeleton diagram of a power transmission device according to an eighth embodiment of the present invention.
[Fig. 9] It is a skeleton diagram of a power transmission device according to a ninth embodiment of the present invention.

## Claims

1. A power transmission device for a hybrid vehicle having an internal combustion engine and a motor, comprising:
a first speed changing unit which has a first input shaft connected to a power shaft of an internal combustion engine and which establishes a plurality of gear shift stages;
a second speed changing unit which has a second input shaft connected to a power shaft of a motor and which establishes a plurality of gear shift stages which is different from that of the first speed changing unit; and
a connecting unit which disconnectably connects the first input shaft and the second input shaft.

2. The power transmission device for a hybrid vehicle according to claim 1, wherein the connecting unit makes the power of the internal combustion engine variable by the second speed changing unit through the intermediary of the first input shaft.

3. The power transmission device for a hybrid vehicle according to claim 1 or 2, wherein a single output shaft from which the rotation of each gear shift stage of the first speed changing unit and the rotation of each gear shift stage of the second speed changing unit are output together.

4. The power transmission device for a hybrid vehicle according to claim 3, wherein any one gear shift stage established by the second speed changing unit is lower than any one gear shift stage established by the first speed changing unit.

5. The power transmission unit for a hybrid vehicle according to any one of claims 2 to 4, wherein any one gear shift stage established by the second speed changing unit is higher than any one gear shift stage established by the first speed changing unit.

6. The power transmission unit for a hybrid vehicle according to any one of claims 1 to 5, wherein at least one of the first speed changing unit and the second speed changing unit is constructed of a stepless speed changing mechanism that continuously establishes gear shift stages.

7. The power transmission unit for a hybrid vehicle according to any one of claims 1 to 5, wherein the first speed changing unit is constructed of a rotation transmitting element provided with a plurality of gears corresponding to the gear shift stages, and the rotation transmitting element is provided with a one-way clutch that engages or disengages the transmission of the rotation between the gears according to the rotational speed to be transmitted.

8. The power transmission device for a hybrid vehicle according to claim 7, wherein the one-way clutch of the rotation transmitting element is provided between the gear and a supporting shaft that supports the gear.

9. The power transmission device for a hybrid vehicle according to claim 7 or 8, wherein the rotation transmitting element comprises a locking mechanism that maintains the one-way clutch of the rotation transmitting element in a rotation transmitting state.
